# EUROPEAN PATENT APPLICATION

(11) **EP 4 807 543 A1**
(43) Date of publication of application: **16.09.2026**
(21) Application number: 25209649.0
(22) Date of filing: 20.10.2025
(51) Int. Cl.: G06F 9/451, G06N 3/0475, G06N 20/00

(54) **METHOD AND SYSTEM FOR AUTOMATING TASK PROCESSING**

(30) Priority: 14.03.2025 KR 20250033564; 27.05.2025 KR 20250069133
(71) Applicant: Samsung SDS Co., Ltd., Seoul 05510 (KR)
(72) Inventor: Hong, Yoo Jin, 05510 SEOUL (KR); Kwon, Yeong Dae, 05510 SEOUL (KR); Kim,, Brad, 05510 SEOUL (KR)
(74) Representative: GLAWE DELFS MOLL

(57) **Abstract**

A method for automating task processing may include providing information about a task knowledge, comprising a screen snapshot image of a first user device which corresponds to each action included in a task, to a generative artificial intelligence (AI) model, providing a snapshot image of a current screen of a second user device to the generative AI model, obtaining action information to be executed on the current screen from the generative AI model as a response to the provision of the snapshot image, controlling the second user device to automatically execute an action corresponding to the action information on the current screen and repeating the providing of the snapshot image of the current screen to the generative AI model, the obtaining of the action information and the controlling of the second user device to automatically execute the action corresponding to the action information until processing of the task is terminated.

## Description

### BACKGROUND

### 1. Field

The present disclosure relates to a method and system for automating task processing.

### 2. Description of the Related Art

The recent advancement of large language models (LLMs) and computer vision technologies has led to the emergence of graphic user interface (GUI) agent technology. The GUI agent technology can recognize user interface (UI) elements visually displayed on the screen of a user device using graphic elements and execute actions on the UI elements by automatically controlling the user device without a user operation.

A GUI agent system autonomously determines which actions need to be executed to process a natural language-based task and automatically processes the task. Therefore, flexible task processing is possible compared to a conventional robotic process automation (RPA) method that automates task processing by defining processes.

However, an LLM-based GUI agent system relies on knowledge learned by an LLM to understand UI elements displayed on the screen of a user device and execute actions on the UI elements. Therefore, there are limitations in processing various tasks in a fluid execution environment of the user device in which the shape of an icon representing a specific application, the position of the icon on the screen of the user device, etc. can change. For example, if the GUI agent system fails to learn the shape of an icon corresponding to a specific application that has changed due to an update, a failure of task processing may occur.

Therefore, a new automated task processing method is needed to enable the GUI agent system to operate normally even in the fluid execution environment of the user device.

### SUMMARY

Aspects of the present disclosure provide a method of automating task processing and a computing system for performing the method. Specifically, aspects of the present disclosure provide a method of automating graphic user interface (GUI)-based task processing and a computing system for performing the method.

Aspects of the present disclosure also provide a method of automating task processing using a generative artificial intelligence (AI) model and enhancing the performance of the generative AI model by providing the generative AI model with task knowledge including natural language-based text about a task and screen snapshot images corresponding to actions and a computing system for performing the method.

Aspects of the present disclosure also provide a method of generating task knowledge based on a natural language-based task specification including actions for processing a task and a screen snapshot image corresponding to the task and a computing system for performing the method.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

According to an aspect of the present disclosure, there is provided a method for automating task processing, the method being performed by a computing system. The method may comprise obtaining task knowledge comprising a screen snapshot image of a first user device which corresponds to each action included in a task, providing information about the task knowledge to a generative artificial intelligence (AI) model, providing a snapshot image of a current screen of a second user device to the generative AI model, obtaining action information to be executed on the current screen from the generative AI model as a response to the provision of the snapshot image, controlling the second user device to automatically execute an action corresponding to the action information on the current screen and repeating the providing of the snapshot image of the current screen to the generative AI model, the obtaining of the action information and the controlling of the second user device to automatically execute the action corresponding to the action information until processing of the task is terminated.

In some embodiments, wherein the task knowledge may comprise natural language-based text about each action.

In some embodiments, wherein the screen snapshot image may comprise marking information of a user interface (UI) element on which an action is to be executed.

In some embodiments, wherein the action information may be executable code that implements an action to be executed on the current screen of the second user device.

In some embodiments, wherein the task knowledge may comprise information about an initial screen state corresponding to the task, and the method may further comprise controlling the second user device to set the current screen of the second user device to the initial screen state.

In some embodiments, wherein the action information may comprise information about whether the processing of the task is terminated.

In some embodiments, wherein the action information may further comprise information about whether the processing of the task is successful based on termination of the processing of the task, and wherein the controlling of the second user device to automatically execute the action corresponding to the action information may comprise displaying a UI element indicating failure of the processing of the task on the current screen of the second user device based on the failure of the processing of the task.

In some embodiments, wherein the providing of the information about the task knowledge to the generative AI model may comprise receiving user input regarding processing conditions of the task, generating an input prompt, which comprises the task, the processing conditions and the task knowledge, in response to the received user input and providing the input prompt to the generative AI model.

According to another aspect of the present disclosure, there is provided a system for automating task processing. The system comprises at least one processor and at least one memory storing instructions which, when executed by the at least one processor, cause the at least one processor to perform operations, wherein the operations may comprise an operation of obtaining task knowledge comprising a screen snapshot image of a first user device which corresponds to each action included in a task, an operation of providing information about the task knowledge to a generative AI model, an operation of providing a snapshot image of a current screen of a second user device to the generative AI model, an operation of obtaining action information to be executed on the current screen from the generative AI model as a response to the provision of the snapshot image, an operation of controlling the second user device to automatically execute an action corresponding to the action information on the current screen and an operation of repeating the operation of providing the snapshot image of the current screen to the generative AI model, the operation of obtaining the action information and the operation of controlling the second user device to automatically execute the action corresponding to the action information until processing of the task is terminated.

According to yet another aspect of the present disclosure, there is provided a non-transitory computer-readable recording medium storing computer program executable by at least one processor to execute obtaining task knowledge comprising a screen snapshot image of a first user device which corresponds to each action included in a task, providing information about the task knowledge to a generative AI model, providing a snapshot image of a current screen of a second user device to the generative AI model, obtaining action information to be executed on the current screen from the generative AI model as a response to the provision of the snapshot image, controlling the second user device to automatically execute an action corresponding to the action information on the current screen and repeating the providing of the snapshot image of the current screen to the generative AI model, the obtaining of the action information and the controlling of the second user device to automatically execute the action corresponding to the action information until processing of the task is terminated.

### BRIEF DESCRIPTION OF THE DRAWINGS

These and/or other aspects will become apparent and more readily appreciated from the following description of the embodiments, taken in conjunction with the accompanying drawings in which:
FIG. 1 illustrates an example of an automated system according to an embodiment of the present disclosure;
FIG. 2 illustrates a flow of operations for task processing of the automated system according to embodiments of the present disclosure;
FIG. 3 is a flowchart illustrating a method of automating task processing according to an embodiment of the present disclosure;
FIG. 4 is a flowchart specifically illustrating a process of providing information about task knowledge to a generative artificial intelligence (AI) model according to embodiments of the present disclosure;
FIG. 5 is a diagram illustrating a process of obtaining action information from the generative AI model according to embodiments of the present disclosure;
FIG. 6 is a flowchart specifically illustrating a process of automatically executing an action based on the result of processing a task according to embodiments of the present disclosure;
FIG. 7 is a flowchart illustrating a method of generating task knowledge according to an embodiment of the present disclosure;
FIG. 8 is a flowchart specifically illustrating a process of extracting a partial snapshot image corresponding to an action according to embodiments of the present disclosure;
FIG. 9 illustrates task knowledge according to embodiments of the present disclosure;
FIGS. 10A through 10C illustrate snapshot images including marking information of user interface (UI) elements on which actions are to be executed according to embodiments of the present disclosure; and
FIG. 11 is a block diagram of an example of a computing device for performing embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In describing this disclosure, specific descriptions of relevant disclosed configurations or features are omitted where it is believed that such detailed descriptions would obscure the essence of the invention.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure.

In this specification, the singular also includes the plural unless specifically stated otherwise in the phrase.

In addition, in describing the component of the present disclosure, terms, such as first, second, A, B, (a), (b), may be used. These terms are only for distinguishing the components from other components, and the nature or order of the components is not limited by the terms.

In the following embodiments, components described with reference to terms such as "part," "unit," "module," "block," or other similar terms used in the following descriptions and depicted as functional blocks in the accompanying drawings can be implemented as software, hardware, or a combination thereof. The software may include, for example, machine code, firmware, embedded code, and application software. Additionally, the hardware may include, for example, electrical circuits, electronic circuits, processors, computers, integrated circuits, integrated circuit cores, passive elements, or combinations thereof.

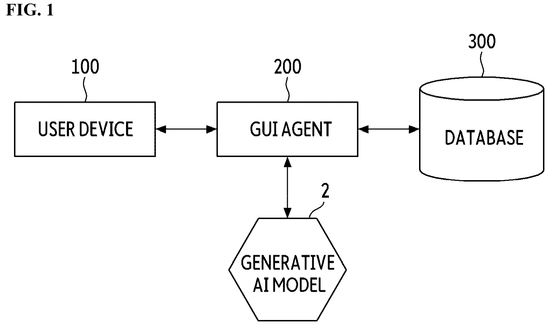

FIG. 1 illustrates an example of an automated system according to an embodiment of the present disclosure.

The automated system may provide a framework for automating task processing by performing methods and/or operations according to embodiments of the present disclosure. For example, the automated system may automatically generate task knowledge based on a task specification and/or a screen snapshot image input by a user and provide the generated task knowledge to a generative artificial intelligence (AI) model 2, thereby enhancing the performance of task processing.

The generative AI model 2 in the present disclosure may be a large language model (LLM) constructed by learning a vast amount of data. It may be a language model pretrained to receive a task and generate and output various forms of content, such as text, images and videos, to process the received task.

In the present disclosure, the generative AI model may also be referred to as a language model, an LLM, a generative AI, a question-answering model, a conversational model, etc.

Unless otherwise mentioned, it is assumed that a model in the present disclosure refers to an LLM.

Referring to FIG. 1, the automated system includes the generative AI model 2 and may further include a user device 100, a graphic user interface (GUI) agent 200, and/or a database 300.

The user device 100 may include various devices used by a user to communicate with other devices to transmit and receive various data and/or information. The user device 100 may include, but is not limited to, a smartphone, a tablet PC, a laptop, etc. For example, the user device 100 may include various computing devices equipped with a wireless communication unit and/or a computing unit. The user device 100 may also be referred to as a user terminal, a wireless device, a mobile terminal, a portable device, etc.

A user in the present disclosure may refer to a person who wishes to automatically process a task using the automated system according to embodiments of the present disclosure.

For example, the user may generate task knowledge corresponding to a task by inputting a natural language-based task specification and/or a screen snapshot image showing a process of processing the task to the automated system through the user device 100.

For another example, the user may process a task without a user operation through the user device 100 (e.g., selecting a user interface (UI) element for execution of a specific application through an operation such as click or double-click) by inputting a request to process the task and/or natural language instructions for processing the task to the automated system through the user device 100.

The user device 100 may be used to utilize the GUI agent 200 according to embodiments of the present disclosure. For example, the user device 100 may display UI elements for performing functions of the GUI agent 200 on an application and/or a web browser in which the functions of the GUI agent 200 are implemented according to embodiments of the present disclosure.

For another example, the user device 100 may display a process in which the GUI agent 200 automatically processes a task according to embodiments of the present disclosure. The user device 100 may be controlled by the GUI agent 200 to execute an action corresponding to the task according to embodiments of the present disclosure. Accordingly, a screen displayed on the user device 100 may be updated.

The GUI agent 200 may refer to a computing device/system for automating task processing.

A task may be composed of a plurality of subtasks that are processed sequentially.

In the present disclosure, a task and/or subtask may refer to a job that can be processed through a series of action processes on one or more UI elements that can be executed on the screen of the user device 100. Therefore, the task and/or subtask may include a plurality of actions that are sequentially executed on the screen of the user device 100.

The task and/or subtask may be processed by executing the actions on UI elements visually displayed on the screen of the user device 100 using graphic elements such as icons, buttons, images, menus, text input windows, tabs, pop-ups, modal windows, sliders, and check boxes.

An action is an operation on a specific UI element that must be executed to process a task. The action may refer to any form of operation (e.g., click, double-click, left-click, right-click, mouse-hover, scroll, drag, text input, keyboard key input, etc.) that can be executed on the specific UI element displayed on the screen of the user device 100 based on user input.

The GUI agent 200 may receive a task specification and/or a screen snapshot image from a user through the user device 100 and automatically generate task knowledge corresponding to a task using one or more models included in the database 300 based on the task specification and/or the screen snapshot.

The task specification is a description of the task composed of natural language-based text. The task specification may include a plurality of subtasks that can be processed by sequentially executing a plurality of actions.

The subtasks included in the task may need to be processed sequentially to process the task, and the task specification may further include information about a processing order of the subtasks that need to be processed sequentially.

The screen snapshot image received from the user to generate the task knowledge corresponding to the task may refer to a snapshot video and/or snapshot still image of the screen of the user device 100 in which a process of processing the task has been recorded. For example, the user may demonstrate the process of processing the task by manually processing the task using a first user device and generate a screen snapshot image by capturing a screen of the first user device which is updated during the demonstration process.

The GUI agent 200 may extract the subtasks composed of natural language-based text from the task specification input by the user and may also extract the processing order of the subtasks.

The GUI agent 200 may extract a partial snapshot image corresponding to each action for processing the task included in the task specification from the screen snapshot image input by the user using one or more models included in the database 300.

For example, the GUI agent 200 may extract the subtasks from the task specification using one or more models and may extract each action included in each of the subtasks and/or a partial snapshot image corresponding to each action by using the screen snapshot image and the task specification input by the user.

The GUI agent 200 may identify a UI element on which a corresponding action is to be executed among a plurality of UI elements included in the partial snapshot image extracted from the screen snapshot image input by the user and may automatically generate task knowledge including information about the partial snapshot image corresponding to each action for processing the task and/or the UI element identified as an execution target of each action.

The task knowledge may further include the task composed of natural language-based text, the subtasks, the processing order of the subtasks, the actions composed of natural language-based text, and an execution order of the actions.

In addition, the GUI agent 200 may generate task knowledge including an initial screen state corresponding to the task at the stage of generating the task knowledge in order to initially set a screen state of the user device 100, in which automatic processing of the task is performed, before automatically processing the task.

For example, the GUI agent 200 may generate the initial screen state corresponding to the task based on the screen snapshot image input by the user using a model included in the database 300.

For another example, the GUI agent 200 may receive the initial screen state from the user together with the task specification and/or the screen snapshot image or may generate task knowledge based on a preset initial screen state corresponding to the task.

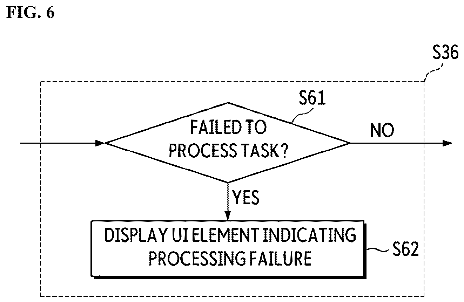

A specific embodiment of generating task knowledge will be described later with reference to FIGS. 6 through 9.

The GUI agent 200 may obtain task knowledge corresponding to a target task to be processed, provide information about the task knowledge to the generative AI model 2, provide a current screen displayed on the user device 100, in which processing of the target task is performed, to the generative AI model 2, and obtain action information that must be executed on the current screen to process the task from the generative AI model 2 as a response to the provision of the current screen.

Here, the first user device on which a screen snapshot image, input by a user to generate task knowledge, and/or a partial snapshot image, included in the task knowledge, are generated may be the same as or different from a second user device in which a target task is processed.

In other words, the first user device which is used by the user to demonstrate the target task in order to generate task knowledge to be provided to the generative AI model 2 and the second user device which automatically processes the target task based on an image in which the demonstration process has been recorded may be the same device or may be different, independent devices.

For example, the user may demonstrate the target task using the first user device and generate task knowledge by capturing the screen of the first user device which is updated during the process of demonstrating the target task. The first user device may be controlled by the GUI agent 200 to automatically execute the target task based on the task knowledge.

For another example, the user may demonstrate the target task using the first user device and generate task knowledge by capturing the screen of the first user device which is updated during the process of demonstrating the target task. In this case, the user may input a request to process the target task through the second user device which is different from the first user device. In response to the input of the processing request, the second user device may be controlled by the GUI agent 200 to automatically process the target task based on the task knowledge.

The above examples are operations for processing the target task, which can be performed when the first user device and the second user device are the same device or independent devices. The operations of the first user device and/or the second user device are not limited to the above examples.

For reference, the first user device and/or the second user device may correspond to the user device 100 of FIG. 1.

The GUI agent 200 may control the user device 100 to automatically execute an action corresponding to action information obtained from the generative AI model 2 as a response to the provision of the current screen displayed on the user device 100 in which processing of the target task is performed.

The action information obtained from the generative AI model 2 may include an action that must be performed on the current screen of the user device 100 provided to the generative AI model 2 and a specific UI element on which the action is to be executed among a plurality of UI elements displayed on the current screen.

The GUI agent 200 may be implemented on at least one computing device. For example, all functions of the GUI agent 200 may be implemented on a single computing device. For another example, some functions of the GUI agent 200 may be implemented on a first computing device, and the other functions may be implemented on a second computing device. In addition, a specific function of the GUI agent 200 may be implemented on one or more computing devices.

In addition, the GUI agent 200 may be a computing device/system that can automatically control the user device 100 to process a target task without user intervention. Although the user device 100 and the GUI agent 200 are illustrated as independent modules in FIG. 1, the present disclosure is not limited to this case.

For example, the user device 100 may include a computer program that performs all/some of the functions of the GUI agent 200. Since the user device 100 is controlled through this computer program, the user device 100 corresponding to the GUI agent 200 may perform all/some of the functions of the GUI agent 200.

For example, the user device 100 may obtain task knowledge corresponding to a target task to be processed and provide information about the task knowledge to the generative AI model 2.

For another example, the user device 100 may generate a snapshot image of the current screen of the user device 100 and provide the snapshot image of the current screen to the generative AI model 2.

The database 300 may refer to a repository that stores various data and/or information that can be used by the GUI agent 200 according to embodiments of the present disclosure.

For example, the database 300 may include a task knowledge repository which includes task knowledge corresponding to tasks in various domains. Each piece of task knowledge included in the task knowledge repository may be identified by a corresponding task and a set identification number corresponding to the task.

For another example, the database 300 may include a model repository which includes one or more models that can analyze images to generate task knowledge.

For another example, the database 300 may further include a repository which includes task processing results obtained as a result of automatically processing tasks.

The components illustrated in FIG. 1 may communicate through various types of wired/wireless networks. A device and/or system according to the present disclosure is applicable to a local area network (LAN), a wide area network (WAN), a mobile radio communication network, wireless broadband Internet (Wibro), etc. However, the present disclosure is not limited to this case, and the device and/or system may also be applicable to any other communication system.

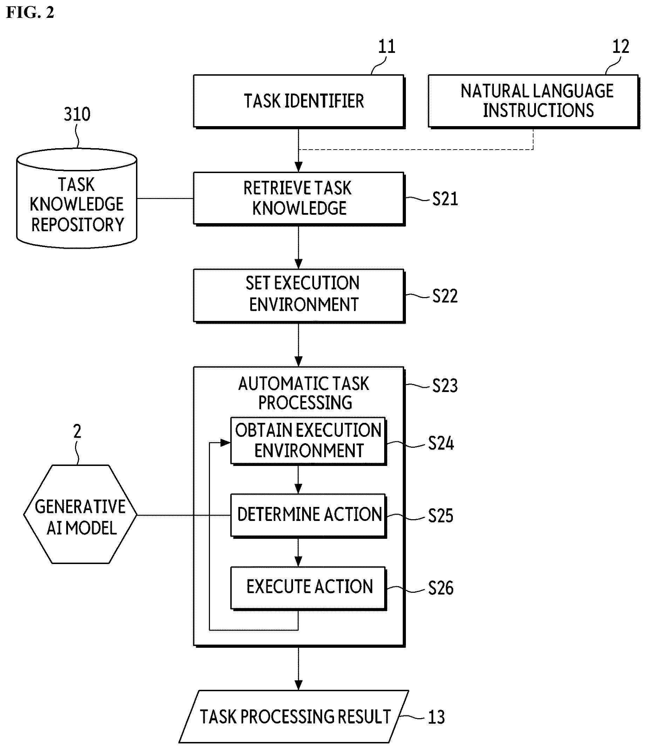

FIG. 2 illustrates a flow of operations for task processing of the automated system according to embodiments of the present disclosure.

The automated system may process a target task by performing a task knowledge retrieval process (operation S21), an execution environment setting process (operation S22), and an automatic task processing process (operation S23) in response to a request to process the target task.

The request to process the target task may include an identifier 11 of the target task (e.g., a task and a set identification number corresponding to the task).

For example, the automated system may receive user input including the identifier 11 of the target task and the request to process the target task from a user through the user device 100 and automatically process the target task in response to the received user input.

For another example, a computer program that performs the function of the GUI agent 200, which automatically processes a preset target task, may be preset to be automatically executed when the user device 100 is booted. Accordingly, the automated system can automatically process the target task without a user operation.

The automated system may retrieve task knowledge corresponding to the target task from a task knowledge repository 310 using the task identifier 11 (operation S21).

The automated system may set the current screen of the user device 100, in which processing of the target task is performed, to an initial screen state by using the initial screen state corresponding to the target task included in the retrieved task knowledge (operation S22).

For example, if the initial screen state corresponding to the target task is a state in which all application windows are closed, the GUI agent 200 may control the user device 100 to close all application windows currently displayed on the current screen of the user device 100 before performing the automatic target task processing process (operation S23).

The automated system may automatically process the task by repeating a process of providing the task knowledge corresponding to the target task, which is retrieved in operation S21, to the generative AI model 2 and obtaining an execution environment in which an action is to be executed on a specific UI (operation S24), a process of determining an action that must be executed in the obtained execution environment (operation S25), and a process of automatically executing the determined action (operation S26) until the processing of the task is terminated.

The automated system may receive user input including natural language instructions 12 from the user through the user device 100 and provide the natural language instructions 12 included in the user input to the generative AI model 2 together with the task knowledge.

For example, the natural language instructions 12 may include processing conditions of the target task, such as a natural language-based instruction that restricts a response format of the generative AI model 2 and a natural language-based instruction that adjusts the scope of the task.

The automated system may generate an input prompt using the task knowledge retrieved in operation S21 and/or the natural language instructions 12 and provide the input prompt to the generative AI model 2 before the automatic task processing process (operation S23) is performed.

The input prompt may include the task knowledge and/or the natural language instructions 12. The automated system may generate an input prompt further including an instruction that restricts the response format of the generative AI model 2 to a preset response format.

The execution environment refers to the current screen of the user device 100 in which the automatic processing of the target task is performed. In operation S24, the automated system may obtain a snapshot image of the current screen of the user device 100. Here, the snapshot image may include a snapshot still image and/or a snapshot video of the current screen of the user device 100.

In operation S25, an action that must be executed on the current screen of the user device 100 to process the target task may be determined. In operation S25, the automated system may provide the snapshot image of the current screen of the user device 100, which is obtained in operation S24, and obtain action information that must be executed on the current screen of the user device 100 from the generative AI model 2 as a response to the provision of the snapshot image.

The generative AI model 2 may recognize and/or analyze UI elements displayed on the current screen of the user device 100 by using the received snapshot image of the current screen and may generate an operation (e.g., click, double-click, left-click, right-click, mouse hover, scroll, drag, text input, keyboard key input, etc.) for a specific UI element as an action that must be executed to process the task on the current screen of the user device 100 by using the received task knowledge.

The generative AI model 2 may recognize and/or analyze UI elements displayed on the current screen of the user device 100 by using the snapshot image of the current screen and determine whether the processing of the target task has been terminated and/or whether the processing of the target task has been successful by comparing the task knowledge and the snapshot image.

The generative AI model 2 may determine that the processing of the task has been terminated if an action that must be executed on the current screen of the user device 100 cannot be generated or executed. If it is determined based on the task knowledge that all of a plurality of sequentially executed actions included in the target task have been executed on the current screen of the user device 100, the processing of the target task may be determined to be successful. If an action cannot be generated or executed due to an error, the processing of the target task may be determined to be unsuccessful.

For example, the generative AI model 2 may include a layer that determines whether the processing of a task has been completed using a received snapshot image of the current screen and a layer that determines an action that must be executed on the current screen based on the determination that the processing of the task has not been completed.

For example, if a UI element on which an action is to be executed cannot be found on the current screen of the user device 100, if a currently generated action cannot be executed due to an unexpected error in a memory of the user device 100, network, security, virus, etc., and/or if a previously determined action is not executed, it may be determined that the target task has failed to be processed.

As a response to the provision of the snapshot image, the generative AI model 2 may generate/output action information including whether the processing of the target task has been terminated, whether the processing of the target task has been successful if the processing of the target task has been terminated, a cause of failure if the processing of the target task has failed, an action that must be executed on the current screen of the user device 100, and/or information about a UI element on which the action is to be executed (e.g., an icon representing the UI element and the position of the UI element on the current screen).

For reference, an action corresponding to the action information obtained from the generative AI model 2 in operation S25 may be different from the action included in the task knowledge.

Even if the shape of a UI element displayed on the current screen of the user device 100 (e.g., the shape of an icon representing a specific application) and the position of the UI element are different from those shown in a screen snapshot image included in the task knowledge, the generative AI model 2 may generate an action that must be executed on the current screen of the user device 100 to process the target task based on previously learned data.

In operation S26, the automated system may automatically execute the action corresponding to the action information obtained from the generative AI model 2. As the action is automatically executed, the current screen of the user device 100 may be updated.

For example, in operation S26, the automated system may determine whether the processing of the target task has been terminated and/or whether the processing of the target task has been successful based on the action information. If the processing of the target task has been successfully terminated, the automated system may terminate the processing of the task without updating the current screen of the user device 100.

For another example, in operation S26, the automated system may determine whether the processing of the target task has been terminated and/or whether the processing of the target task has been successful based on the action information. If the processing of the target task has been terminated because the processing of the target task has failed, the automated system may display an error message composed of text indicating the failure to process the target task and/or the cause of the failure on the current screen of the user device 100 and terminate the processing of the task.

The automated system may obtain a snapshot image of the updated current screen of the user device 100, provide the snapshot image to the generative AI model 2, obtain action information that must be executed on the updated current screen of the user device 100 from the generative AI model 2 as a response to the provision of the snapshot image, and automatically execute an action corresponding to the obtained action information. The automated system may repeatedly perform these operations until the processing of the task is terminated.

The automated system may generate a snapshot image of the screen of the user device 100 during the execution of operation S23 and may generate/record a snapshot image in which the process of processing the target task has been recorded, action information (e.g., an action and a UI element on which the action is to be executed) executed during the repeated execution of operations S24 through S26, and/or a target task processing result 13 including whether the processing of the target task was successful.

If the task processing result 13 indicates that the target task has been successfully terminated, the user may check information about how exceptional situations (e.g., a change in the shape of an icon representing a specific application, a change in the position of the icon, etc.), which did not occur during the demonstration process, were handled during the process of processing the target task and may update the task specification based on the checked information.

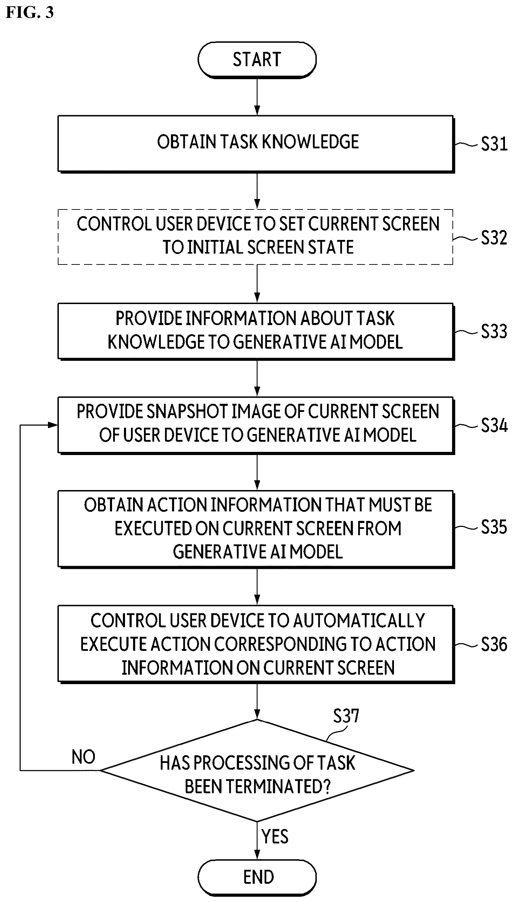

Embodiments in which one or more computing devices perform automation of task processing according to embodiments of the present disclosure will now be described in detail with reference to FIGS. 3 through 5. For reference, FIGS. 3 through 5 illustrate steps/operations performed in the automated system of FIG. 1. Therefore, in the following description, if the subject of a specific step/operation is omitted, it may be understood that the step/operation is performed by the automated system of FIG. 1. The following description will be made with reference to FIGS. 1 and 2, together with FIGS. 3 through 5.

In addition, it should be noted that the technical spirit that can be understood from the embodiments described with reference to FIGS. 1 and 2 can be obviously applied to methods according to embodiments to be described with reference to FIGS. 3 through 5, even if not mentioned specifically.

FIG. 3 is a flowchart illustrating a method of automating task processing according to an embodiment of the present disclosure.

Referring to FIG. 3, task knowledge corresponding to a target task may be obtained (operation S31).

In operation S31, the task knowledge corresponding to the target task may be retrieved from a task knowledge repository.

The target task may be processed by sequentially processing a plurality of actions. The task knowledge may include a screen snapshot image of a first user device which corresponds to each action for processing the target task.

The screen snapshot image included in the task knowledge is a snapshot image of a screen of the first user device which includes marking information of a UI element on which an action is to be executed. For example, the screen snapshot image may be a snapshot still image of the screen of the first user device immediately before/during the execution of a corresponding action and/or a snapshot video of the screen of the first user device which is updated as the corresponding action is executed as well as a video in which the process of executing the corresponding action has been recorded.

The task knowledge is generated from a task specification input by a user and/or a screen snapshot image in which a process of demonstrating the target task has been recorded. The task knowledge may further include natural language-based text about each action included in the target task.

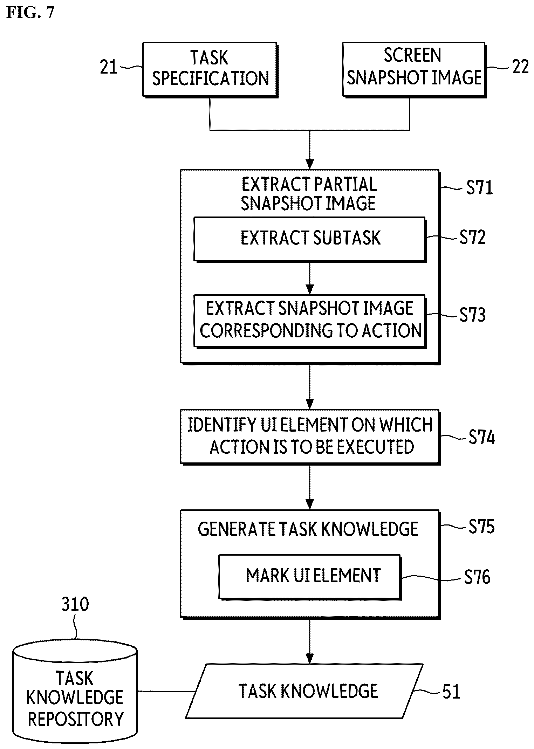

A specific embodiment for generating task knowledge will be described later with reference to FIGS. 7 through 9.

Before the target task is processed, an execution environment for processing the target task may be set. According to embodiments of the present disclosure, the task knowledge may include an initial screen state, and a second user device may be controlled to set a screen of the second user device to the initial screen state (operation S32) before operations S33 through S37 are performed using the task knowledge.

Information about the task knowledge may be provided to the generative AI model 2 (operation S33).

In operation S33, the information about the task knowledge provided to the generative AI model 2 is an input prompt generated based on the task knowledge obtained in operation S31. For example, the information about the task knowledge may include the task knowledge and an instruction requesting the generation of an action that must be executed on a current screen of the second user device which is provided to process the target task based on the task knowledge. However, the information about the task knowledge is not limited to this example.

The information about the task knowledge may further include an instruction that restricts the response format of the generative AI model 2 to a preset response format, such as an instruction to output "FAIL" or "DONE" depending on whether the target task has been successfully terminated, an instruction to generate source code written in a predefined programming language as executable code that implements an action that must be executed on the current screen of the user device 100, etc.

For example, the information about the task knowledge may include a predefined programming parameter and parameter type corresponding to each action and may include an instruction to generate an attribute value of a parameter corresponding to an action that must be executed on the current screen of the user device 100.

A snapshot image of the current screen of the second user device may be provided to the generative AI model 2 (operation S34).

The second user device, in which automatic processing of the target task is performed, may be different from the first user device from which the screen snapshot image included in the task knowledge has been obtained. Therefore, the shape and/or position of a UI element included in the screen snapshot image obtained in operation S31 may be different from the shape and/or position of the UI element included in the snapshot image of the current screen of the second user device obtained in operation S34.

For example, even if the UI element included in the screen snapshot image of the task knowledge and the UI element included in the snapshot image of the current screen of the second user device are icons representing the same application, the shapes of the icons may be different because application versions and/or operating systems of the user devices are different.

As a response to the provision of the snapshot image of the current screen of the second user device, action information that must be executed on the current screen of the second user device may be obtained from the generative AI model 2 (operation S35).

The action information obtained in operation S35 may include, but is not limited to, an action that must be executed on the current screen of the second user device included in the snapshot image provided to the generative AI model 2 in operation S34 and/or a UI element on which the action is to be executed. Information included in the action information may be determined based on the information about the task knowledge provided in operation S33.

For example, the action information may include executable code that implements an action that must be executed on the current screen of the second user device.

The action information may further include whether the processing of the target task has been terminated, whether the processing of the target task has been successful if the processing of the target task has been terminated, and/or the cause of failure if the processing of the target task has failed.

For example, if the generative AI model 2 determines that the processing of the target task has been terminated, the action information may include whether the processing of the target task has been terminated, whether the processing of the target task has failed and/or the cause of failure to process the target task and may further include text indicating that there is no action to be executed on the current screen of the second user device.

For another example, if the generative AI model 2 determines that the processing of the target task has not been terminated, the action information may include whether the processing of the target task has been terminated and an action that must be executed on a specific UI element on the current screen of the second user device.

The second user device may be controlled to automatically execute an action corresponding to the action information obtained from the generative AI model 2 (operation S36).

In operation S36, the screen of the second user device may be updated as the action corresponding to the action information is automatically executed.

For example, the executable code included in the action information may be automatically executed without a user operation. Accordingly, the current screen of the second user device may be updated.

Whether the processing of the target task has been terminated may be determined using the action information obtained from the generative AI model 2. The task may be automatically processed by repeating operations S34 through S36 until the processing of the target task is terminated (operation S37).

In operation S35, in order to obtain highly accurate action information from the generative AI model 2, an action executed immediately previously as operations S34 through S36 are repeated and/or a task (e.g., a subtask included in the target task) that must be performed on the current screen may be provided to the generative AI model 2, together with a snapshot image of the current screen of the second user device.

In FIG. 3, operations S36 and S37 are illustrated in a specific order. However, the determination of whether the processing of the target task has been terminated is not necessarily performed after operation S36. For example, whether the processing of the target task has been terminated may be determined before and/or at the same time as the automatic execution of an action based on the action information obtained in operation S35.

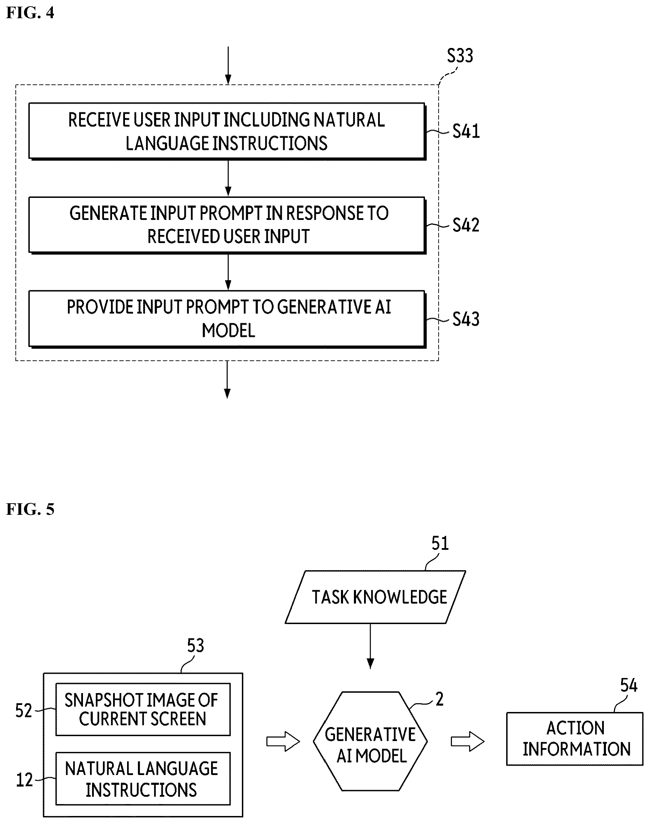

Next, a process of providing the information about the task knowledge to the generative AI model 2 in operation S33 of FIG. 3 will be described in detail with reference to FIG. 4.

FIG. 4 is a flowchart specifically illustrating a process of providing information about task knowledge to the generative AI model 2 according to embodiments of the present disclosure.

Operation S33 of FIG. 4 may correspond to operation S33 of FIG. 3.

Referring to FIG. 4, in operation S33, user input including natural language instructions 12 may be received (operation S41), and an input prompt may be generated in response to the received user input (operation S42).

In operation S42, the user input regarding the natural language instructions 12 which include processing conditions of the target task, such as a natural language-based instruction that restricts the response format of the generative AI model 2 and a natural language-based instruction that adjusts the scope of the task, may be received.

In operation S42, an input prompt including the natural language instructions 12 and the task knowledge obtained in operation S31 of FIG. 3 may be generated. As described with reference to FIG. 3, the input prompt in operation S42 may correspond to the information about the task knowledge in operation S33 of FIG. 3.

The input prompt generated in operation S42 may be provided to the generative AI model 2 (operation S43).

Next, a process in which the generative AI model 2 generates action information based on the input prompt generated in operation S42 of FIG. 4 will be described in detail with reference to FIG. 5.

FIG. 5 is a diagram illustrating a process of obtaining action information from the generative AI model 2 according to embodiments of the present disclosure.

Referring to FIG. 5, the generative AI model 2 may be provided with/receive an input prompt 53 including a snapshot image 52 of the current screen of the second user device, in which the processing of the target task is performed, and natural language instructions 12 and may generate/output an action that must be executed on the current screen of the second user device to process the target task based on the input prompt 53.

For example, if the target task is to organize a contact list stored in a target application on a website where functions of the target application are implemented, the natural language instructions 12 including an instruction to organize a contact list of some groups, not all groups included in the contact list, may be received as processing conditions of the target task in operation S41 of FIG. 4.

The generative AI model 2 may recognize UI elements included in the screen of the first user device based on the snapshot image 52 provided in operation S34 of FIG. 3 and analyze the UI elements included in the screen of the first user device based on previously learned data.

Therefore, even if a process of organizing the contact list of all groups is recorded in a screen snapshot image regarding each action included in task knowledge 51 obtained in operation S31 of FIG. 3, the generative AI model 2 may recognize and/or analyze a UI element representing a group to which each contact information displayed on the website, where the functions of the target application are implemented, belongs and/or a UI element implementing a function of filtering each group and may generate action information 54 corresponding to an action that must be executed to process the task of organizing the contact list of some groups.

Next, a process of automatically executing an action corresponding to the action information 54 obtained from the generative AI model 2 in operation S36 of FIG. 3 will be described in detail with reference to FIG. 6.

FIG. 6 is a flowchart specifically illustrating a process of automatically executing an action based on the result of processing a task according to embodiments of the present disclosure.

Operation S36 of FIG. 6 may correspond to operation S36 of FIG. 3, and operation S61 may correspond to operation S37 of FIG. 3.

Referring to FIG. 6, in operation S36, whether the target task has failed to be processed may be determined based on the action information 54 obtained from the generative AI model 2 (operation S61). If it is determined that the target task has failed to be processed, a UI element indicating the failure to process the target task may be displayed on the current screen of the second user device (operation S62).

The termination of task processing may include a case where the task processing has been successfully completed and a case where the task processing has failed.

For example, based on the snapshot image 52 of the current screen of the second user device, the generative AI model 2 may determine cases where an action cannot be generated/executed for various reasons, such as a case where a UI element on which an action is to be executed cannot be found on the current screen of the user device 100 and a case where a currently generated action and/or a previously determined action cannot be executed due to an unexpected error in the memory of the user device 100, network, security, virus, etc. If an action cannot be generated/executed, it may be determined that the target task has been terminated and that the processing of the target task has failed.

If it is determined that the processing of the target task has failed, a UI element (e.g., a pop-up window/modal window, etc.) including an error message indicating the failure to process the target task and/or the cause of the failure to process the target task may be displayed on the current screen of the second user device in operation S62, and the process of processing the target task may be terminated.

Conversely, if it is determined that the processing of the target task has been successful, the process of processing the target task may be terminated without updating the current screen of the second user device.

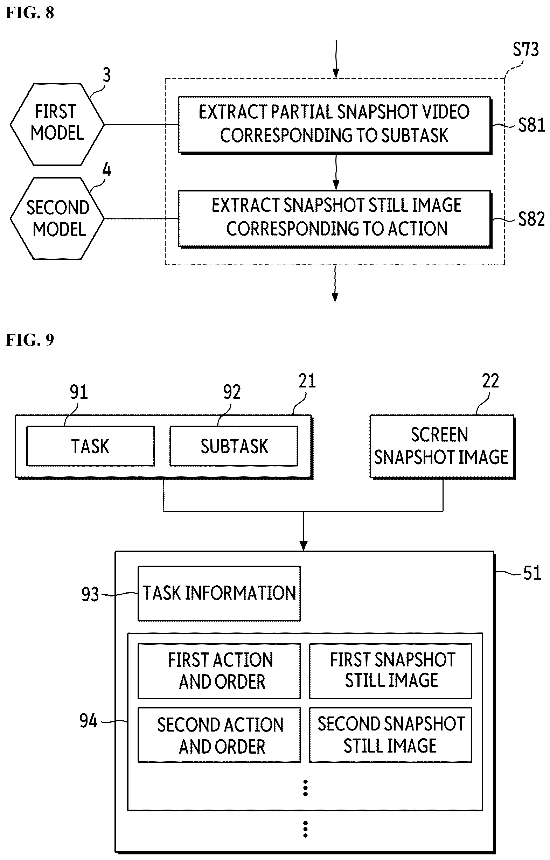

Embodiments in which one or more computing devices generate task knowledge to be provided to the generative AI model 2 in order to automatically process a task according to embodiments of the present disclosure will now be described in detail with reference to FIGS. 7 through 10C. For reference, FIGS. 7 and 8 illustrate steps/operations performed in the automated system of FIG. 1. Therefore, in the following description, if the subject of a specific step/operation is omitted, it may be understood that the step/operation is performed by the automated system of FIG. 1. The following description will be made with reference to FIGS. 7 through 10C, together with FIGS. 1 through 6.

In addition, it should be noted that the technical spirit that can be understood from the embodiments described with reference to FIGS. 1 and 2 can be obviously applied to methods according to embodiments to be described with reference to FIGS. 7 through 10C, even if not mentioned specifically.

FIG. 7 is a flowchart illustrating a method of generating task knowledge according to an embodiment of the present disclosure.

Referring to FIG. 7, a task specification 21 composed of natural language-based text which corresponds to a task including a plurality of sequentially executed actions may be input by a user, and a screen snapshot image 22 of a first user device which corresponds to the task may be input by the user.

The screen snapshot image 22 may be generated by capturing a screen of the first user device which is updated as the user demonstrates processing of the task by manually processing the task using the first user device. The screen snapshot image 22 may be a snapshot video of the screen of the first user device which includes a plurality of actions executed on the screen of the first user device and/or a snapshot still image of the screen of the first user device immediately before/during the execution of each action.

For example, if the task is to organize a contact list stored in a target application on a website where functions of the target application are implemented, the user may input the task specification 21 as shown in a table below.

**[Table 1]**

| Task | Organize Target Application's Contact List |
|---|---|
| Steps | 1. Access a website where a target application is implemented (a "URL of the website where functions of the target application are implemented") through a target browser. |
| | 2. Click the 'Contact Information' menu at the top of the website. |
| | 3. Click the "Group Management' button to check groups corresponding to contact information. |
| | 4. Sequentially select a plurality of set groups, and when a 'Delete Persons on Leave/Retired' pop-up appears, select 'Yes' to delete all. |

Referring to Table 1, the task specification 21 may include the task, a plurality of subtasks respectively corresponding to sequentially performed steps included in the task, and/or a processing order of the subtasks. Each subtask may include one or more actions that are performed sequentially.

For example, the screen snapshot image 22 corresponding to the task included in Table 1 may be a snapshot video of the screen of the first user device which is updated as four subtasks included in the task are manually processed by the user.

A partial snapshot image corresponding to each action included in the task may be extracted from the screen snapshot image 22 using the task specification 21 (operation S71).

In operation S71, each subtask included in the task may be extracted from the task specification 21 (operation S72), and a partial snapshot image corresponding to each action included in the extracted subtasks may be extracted from the screen snapshot image 22 (operation S73).

The partial snapshot image extracted in operation S71 corresponds to each action included in the task and/or subtasks and may be a snapshot video of a specific time period included in the screen snapshot image 22 and/or a snapshot still image of a specific time.

For example, if the task specification 21 shown in Table 1 and the screen snapshot image 22 corresponding to the task included in Table 1 are input, a first partial snapshot image corresponding to a first subtask "Access a website where a target application is implemented (a "URL of the website where functions of the target application are implemented") through a target browser," a second partial snapshot image corresponding to a second subtask "Click the 'Contact Information' menu at the top of the website," a third partial snapshot image corresponding to a third subtask "Click the "Group Management' button to check groups corresponding to contact information," and a fourth partial snapshot image corresponding to a fourth subtask "Sequentially select a plurality of set groups, and when a 'Delete Persons on Leave/Retired' pop-up appears, select 'Yes' to delete all" may be extracted from the screen snapshot image 22.

A UI element on which a corresponding action is to be executed may be identified among a plurality of UI elements included in the partial snapshot image (operation S74).

A plurality of UI elements may be displayed on the screen of the first user device, such as an icon for executing a web browser corresponding to each of a plurality of different applications, a clock, an icon corresponding to a web browser running on the first user device, and UI elements (e.g., a search bar, a button to terminate execution of a web browser displaying a website, a logo indicating the name of the web browser, etc.) included in a website that implements functions of a specific application displayed on the screen of the first user device. Accordingly, the UI elements may be included in the partial snapshot image extracted in operation S71. In operation S74, a UI element on which an action corresponding to the partial snapshot image is to be executed may be identified among the UI elements (operation S74).

Task knowledge 51 including the partial snapshot image corresponding to each action and/or information about the UI element identified as an execution target of each action may be generated (operation S75).

In operation S75, the UI element on which the action corresponding to the partial snapshot image is to be executed may be marked in the partial snapshot image (operation S76).

In operation S76, a partial snapshot image including marking information of the UI element identified in operation S74 may be generated, and the task knowledge 51 may include the partial snapshot image corresponding to each action which includes the marking information of the UI element identified in operation S74.

Since the user can generate the task knowledge 51 corresponding to each of a plurality of tasks, the task knowledge 51 may further include a set identification number corresponding to a corresponding task.

For example, the identification number included in each piece of task knowledge may be set according to a generation order of the task knowledge 51.

According to embodiments of the present disclosure, the task knowledge 51 may further include natural language-based text about the task (i.e., the task composed of natural language-based text) and/or natural language-based text about each action included in each subtask (i.e., each action composed of natural language-based text). Each action included in the task and/or subtasks may correspond to an action (e.g., "Click the 'Contact Information' menu," "Click the 'Group Management' button," "Select 'Yes'," etc.) shown in the task specification 21 as in Table 1. Alternatively, each action included in the task and/or subtasks may not be shown in the task specification 21 but may be extracted from the task specification 21 using a pretrained model.

In addition, the task knowledge 51 may be generated to include information additionally input by the user, in addition to information obtained as a result of performing operations S71 through S74 (e.g., subtasks, actions included in the subtasks, snapshot images corresponding to the actions).

In addition, application programming interface (API) information called when an action included in the task and/or subtasks is executed during the generation of the screen snapshot image 22 may be obtained, together with the task specification 21 and/or the screen snapshot image 22. The obtained API information may be further included in the task knowledge 51.

The task knowledge 51 generated as a result of performing operations S71 through S76 may be stored in the task knowledge repository 310. In response to a request to process the task corresponding to the task knowledge 51, the task knowledge 51 may be provided to the generative AI model 2 for automatic processing of the task according to the embodiments described with reference to FIGS. 2 through 6.

Next, a process of extracting a partial snapshot image corresponding to each action in operation S73 of FIG. 7 will be described in detail with reference to FIG. 8.

FIG. 8 is a flowchart specifically illustrating a process of extracting a partial snapshot image corresponding to an action according to embodiments of the present disclosure.

Operation S73 of FIG. 8 may correspond to operation S73 of FIG. 7.

Referring to FIG. 8, in operation S73, a partial snapshot video corresponding to a subtask included in the task specification 21 may be extracted from the screen snapshot image 22 using a first model 3 (operation S81).

In operation S81, the task specification 21 and/or the screen snapshot image 22 may be provided to the first model 3.

For example, the first model 3 may be an LLM that can recognize and analyze natural language and/or images. In operation S81, an input prompt including the task and/or subtasks included in the task specification 21 and the screen snapshot image 22 may be generated, and the input prompt may be provided to the first model 3.

For another example, the input prompt provided to the first model 3 may further include an instruction to extract a snapshot video corresponding to a subtask and/or an instruction to restrict a response format of the first model 3 (e.g., an instruction that includes a predefined response format and instructs to generate a response according to the format).

For reference, the screen snapshot image 22 may also be provided to the first model 3 prior to the provision of the input prompt and separately from the input prompt including the task and/or subtasks and/or instructions included in the task specification 21.

In operation S81, as a response to the provision of the input prompt including the task specification 21 and/or the screen snapshot image 22, information about a partial snapshot video corresponding to each subtask may be obtained from the first model 3.

Based on the input prompt, the first model 3 may extract a snapshot image of a time period in which a process of processing each subtask was recorded during the entire time period of the screen snapshot image 22. Accordingly, the first model 3 may generate/output information about a plurality of partial snapshot videos corresponding to the subtasks (e.g., natural language-based text about each subtask, a time period corresponding to each partial snapshot video in the entire time period of the screen snapshot image 22, etc.).

For example, if the task specification 21 is input as shown in Table 1, the screen snapshot image 22 and an input prompt shown in a table below may be provided to the first model 3 in operation S81.

**[Table 2]**

| |
|---|
| A task to be processed according to the following steps is provided, and a video showing how each step is performed is provided. For each step, generate timestamps indicating the start and end of the step. A response must be in a response format defined as follows. Response format: {"steps": {["step execution order":index_number, "step":"text about a subtask included in a provided task specification", "start timestamp": "00:00", "end timestamp":"00:00"]}} |
| # Task |
| The following are the steps that must be performed to process the "Organize Target Application's Contact List" task. |
| 1. Access a website where a target application is implemented (a "URL of the website where functions of the target application are implemented") through a target browser. |
| 2. Click the 'Contact Information' menu at the top of the website. |
| 3. Click the "Group Management' button to check groups corresponding to contact information. |
| 4. Sequentially select a plurality of set groups, and when a 'Delete Persons on Leave/Retired' pop-up appears, select 'Yes' to delete all. |

When the input prompt shown in Table 2 is provided to the first model 3, information about a partial snapshot video corresponding to each subtask may be obtained as in a table below as a response to the provision of the input prompt.

**[Table 3]**

| |
|---|
| { |
| "Steps": [ |
| { "Step execution order": 1, |
| "Step": "Access a website where a target application is implemented (a "URL of the website where functions of the target application are implemented") through a target browser.", |
| "Start timestamp": "00:02", |
| "End timestamp": "00:05" |
| }, |
| { "Step execution order": 2, |
| "Step": "Click the 'Contact Information' menu at the top of the website.", |
| "Start timestamp": "00:06", |
| "End timestamp": "00:07" |
| }, |
| { "Step execution order": 3, |
| "Step": "Click the "Group Management' button to check groups corresponding to contact information.", |
| "Start timestamp": "00:08", |
| "End timestamp": "00:11" |
| }, |
| { "Step execution order": 4, |
| "Step": "Sequentially select a plurality of set groups, and when a 'Delete Persons on Leave/Retired' pop-up appears, select 'Yes' to delete all.", |
| "Start timestamp": "00:11", |
| "End timestamp": "00:45" |
| } |
| ] |
| } |

Referring to Table 3, the information about the partial snapshot video corresponding to each subtask, which is obtained from the first model 3 as a response to the provision of the task specification 21 and/or the screen snapshot image 22, may include natural language-based text about the subtask, a processing order of the subtask, and a time period corresponding to the partial snapshot video in the entire time period of the screen snapshot image 22.

Since each subtask included in the task specification 21 and the partial snapshot video corresponding to each subtask can be obtained from the first model 3 as a response to the provision of the task specification 21 and/or the screen snapshot image 22, operation S72 of FIG. 7 may correspond to operation S81 of FIG. 9.

In operation S81, each subtask included in the task specification 21 and/or the partial snapshot video corresponding to each subtask in the screen snapshot image 22 may be extracted using the information about the partial snapshot video corresponding to each subtask which is obtained from the first model 3.

A snapshot still image corresponding to each action included in each subtask may be extracted from the partial snapshot video using a second model 4 (operation S82).

In operation S82, the second model 4 may be an LLM that can recognize and analyze natural language and/or images and may be the same as or different from the first model 3.

In operation S82, each subtask included in the task specification 21, which is extracted in operation S72 and/or operation S81, and/or the partial snapshot video corresponding to each subtask, which is extracted in operation S81, may be provided to the second model 4. As a response to the provision of the task specification 21 and/or the partial snapshot video, information about a snapshot still image corresponding to each action included in the task and/or subtasks included in the task specification 21 may be obtained from the second model 4.

For example, an input prompt including information about a subtask included in the task specification 21 and a partial snapshot video corresponding to the subtask may be generated. The input prompt may be provided to the second model 4.

For another example, the input prompt provided to the second model 4 may further include an instruction to extract each action included in the subtask, an instruction to extract a snapshot still image corresponding to each action included in the subtask from the partial snapshot video corresponding to the subtask, and/or an instruction that restricts a response format of the second model 4 (e.g., an instruction that includes a predefined response format and instructs to generate a response according to the format).

For reference, the partial snapshot video corresponding to the subtask may also be provided to the second model 4 prior to the provision of the input prompt and separately from the input prompt including the subtask and/or the instructions.

In operation S82, as a response to the provision of the input prompt including the subtask and/or the partial snapshot video corresponding to the subtask, information about a snapshot still image corresponding to each action included in the subtask may be obtained from the second model 4.

The snapshot still image corresponding to each action included in the subtask may be a frame image captured at a specific time immediately before or during the execution of the action among a plurality of frame images included in the partial snapshot video corresponding to the subtask.

The process of extracting the snapshot still image corresponding to each action included in the subtask may be repeatedly performed for each of the subtasks included in the task specification 21 (i.e., the subtasks included in the task specification 21 which are extracted in operation S71 and/or operation S81).

In other words, a plurality of input prompts generated to respectively correspond to a plurality of subtasks included in the task specification 21 may be repeatedly provided to the second model 4. Accordingly, information about a snapshot still image corresponding to each action included in each subtask may be obtained from the second model 4 as a response to the provision of the input prompt corresponding to each subtask.

The second model 4 may extract one or more actions that must be executed to process a subtask as actions included in the subtask based on an input prompt. In addition, the second model 4 may extract a snapshot still image at a specific time immediately before/during the execution of each action from a partial snapshot video corresponding to the subtask. Accordingly, the second model 4 may generate/output information about the snapshot still image corresponding to each action (e.g., natural language-based text about each action, a specific time immediately before or during the execution of each action in the entire time period of the partial snapshot video corresponding to the subtask, etc.).

For example, if information about a partial snapshot video corresponding to a subtask in Table 3 is obtained from the first model 3 in operation S81, the partial snapshot video corresponding to the subtask and an input prompt shown in a table below may be provided to the second model 4 in operation S82.

**[Table 4]**

| |
|---|
| A description of a task and a video showing how the task is executed are provided. To completely process the task, a series of actions (e.g., double-click or text input) of controlling a mouse and a keyboard must be executed. Generate an execution order of the actions in the video, together with a timestamp when each action must be executed. A response must be in a format defined as follows. Response format: {"actions": {["action execution order":index _number, "action": "action description such as 'double-click an icon of a target browser'," "timestamp": "00:00"]}} |
| If an action is text input, consider the input of the entire text as a single action and generate a timestamp at the completion of the entire input. |
| # Task |
| Access a website where a target application is implemented (a "URL of the website where functions of the target application are implemented") through a target browser. |

When the input prompt shown in Table 4 is provided to the second model 4, information about the partial snapshot video corresponding to the subtask may be obtained as in a table below as a response to the provision of the input prompt.

**[Table 5]**

| |
|---|
| { |
| "Actions": [ |
| {"Action execution order": 1, |
| "Action": "Double-click an icon of a target browser.", |
| "Timestamp": "00:02" |
| }, |
| {"Action execution order": 2, |
| "Action": "Click an address bar to enter a URL of a website where the target application is implemented.", |
| "Timestamp": "00:02" |
| }, |
| {"Action execution order": 3, |
| "Action": "Enter 'the URL of the website where the target application is implemented' and press the 'Enter' key.", |
| "Timestamp": "00:04" |
| } |
| ] |
| } |

Referring to Table 4, information about a snapshot still image corresponding to each action, which is obtained from the second model 4 as a response to the provision of the subtask and/or the partial snapshot video corresponding to the subtask, may include natural language-based text about one or more actions extracted from the subtask, an execution order of the actions, and a time corresponding to the snapshot still image, which corresponds to each action, in the time period of the partial snapshot video.

In operation S82, the snapshot still image corresponding to each action included in the subtask may be extracted using the information about the snapshot still image corresponding to each action included in the subtask which is obtained from the second model 4.

The snapshot still image corresponding to each action, which is extracted in operation S82, may correspond to the partial snapshot image corresponding to each action included in the task and/or subtasks included in the task specification 21, which is extracted in operation S71 of FIG. 7.

In addition, although not illustrated in FIG. 7, a UI element on which an action is to be executed may be identified using a third model in operation S74 of FIG. 7. The third model may be an LLM that can recognize and analyze natural language and/or images and may be the same as or different from the first model 3 and/or the second model 4.

Referring to FIG. 8, even if the screen snapshot image 22 includes actions unnecessary for processing the task, since a snapshot image corresponding to each action included in each subtask is extracted through the first model 3 and/or the second model 4, snapshot images corresponding to the unnecessary actions can be removed.

Accordingly, the task processing performance of the automated system can be increased compared to when the target task is processed using the entire screen snapshot image 22 as the task knowledge 51.

Referring to FIG. 8 together with FIG. 7, in operation S74 of FIG. 7, an action extracted in operation S82 of FIG. 8 and a snapshot still image corresponding to the action may be provided to the third model. As a response to the provision of the action and the snapshot still image corresponding to the action, identification information of a UI element (e.g., the position of the UI element in the snapshot still image, an icon representing the UI element, text about the UI element, etc.) on which the action is to be executed among a plurality of UI elements included in the snapshot still image may be obtained from the third model.

For example, an input prompt including information about an action and a snapshot still image corresponding to the action may be generated, and the input prompt may be provided to the third model.

For another example, the input prompt provided to the third model may further include an instruction to identify a UI element, on which the action is to be executed, in the snapshot still image and generate information about the identified UI element and/or an instruction that restricts a response format of the third model.

For reference, the snapshot still image corresponding to the action may also be provided to the third model prior to the provision of the input prompt and separately from the input prompt including the action and/or the instructions.

For example, if information about a snapshot still image corresponding to each action included in a subtask as in Table 5 is obtained from the second model 4 in operation S82 of FIG. 8, a snapshot still image corresponding to an action and an input prompt generated as in a table below may be provided to the third model in operation S74 of FIG. 7.

**[Table 6]**

| |
|---|
| When an action of controlling a mouse and a keyboard and a snapshot still image are provided, generate a description of a UI element on which the action must be executed using the mouse and the keyboard (e.g., double-click or text input) and a bounding box (bbox). A response must be in a response format defined as follows. Response format: {"bbox":[ymin,xmin,ymax,xmax], "description": "description of a UI element such as an 'icon of a target browser'"} |
| #Action |
| Double-click an icon of a target browser. |

When the input prompt generated as in Table 6 is provided to the third model, identification information of a UI element on which the action is to be executed may be obtained as in a table below as a response to the provision of the input prompt.

**[Table 7]**

| | |
|---|---|
| { | |
| | "bbox": [476, 251, 529, 737], |
| | "Description": "an icon of a target browser" |
| } | |

Using the identification information of the UI element on which the action is to be executed, which is obtained from the third model, the UI element identified as the execution target of the action is marked in the snapshot still image corresponding to the action in operation S76 of FIG. 7. Accordingly, a snapshot still image including the marking information of the UI element on which the action is to be executed may be generated.

Next, the task knowledge 51 generated according to the method illustrated in FIGS. 7 and 8 will be described in detail with reference to FIG. 9.

FIG. 9 illustrates task knowledge 51 according to embodiments of the present disclosure.

Referring to FIG. 9, a task specification 21 may include a task 91 and/or one or more subtasks 92. A screen snapshot image 22, which is used to generate the task knowledge 51 corresponding to the task 91 together with the task specification 21, is an image in which a process of demonstrating the task 91 has been recorded. The screen snapshot image 22 refers to a snapshot image of a screen of a first user device which is updated as the task 91 is manually processed by a user.

The task knowledge 51 generated using the task specification 21 and/or the screen snapshot image 22 according to the embodiments described with reference to FIGS. 7 and 8 may include task information 93, an action list included in the task 91 and/or the subtasks 92, and a snapshot image (e.g., a snapshot still image) corresponding to each action included in the action list.

Specifically, the task information 93 may include natural language-based text about the task 91 and identification information of the task 91 such as a set identification number corresponding to the task 91.

Each of the subtasks 92 may include a plurality of actions. The actions included in each subtask 92 and a snapshot image corresponding to each of the actions may be mapped by subtask and stored in a standardized format in the task knowledge repository 310.

For example, a first action and a second action included in a first subtask 94 may be mapped to a first snapshot still image and a second snapshot still image, respectively. The first action and the second action may be mapped with information about the first subtask 94 (e.g., natural language-based text about the first subtask 94) together with an action execution order and may be stored in the task knowledge storage 310.

The task knowledge 51 is information that can be provided to the generative AI model 2 for automatic execution of the task 91 later. If a target task to be automatically processed is the task 91 in operation S31 of FIG. 3, a snapshot image (e.g., the first snapshot still image or the second snapshot still image of FIG. 9) corresponding to an action included in the task knowledge 51 may correspond to a screen snapshot image included in the task knowledge obtained in operation S31 of FIG. 3.

However, a storage structure of the information included in the task knowledge 51 is not limited to that illustrated in FIG. 9. For example, a plurality of snapshot images (e.g., the first snapshot still image and the second snapshot still image of FIG. 9) respectively corresponding to a plurality of actions included in the first subtask 94 may be stored as a single image file mapped to the first subtask 94 and the actions (e.g., the first action and the second action of FIG. 9) included in the first subtask 94.

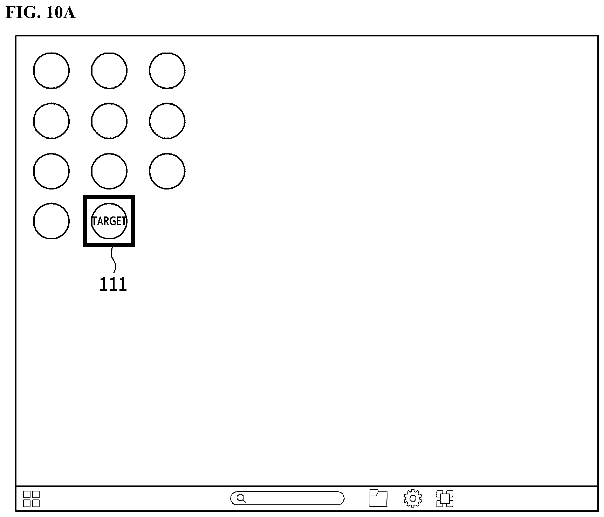

A snapshot image (e.g., the first snapshot still image or the second snapshot still image of FIG. 9) corresponding to an action included in the task knowledge 51 may include marking information of a UI element on which the action is to be executed. This will be described in detail with reference to FIGS. 10A through 10C.

FIGS. 10A through 10C illustrate snapshot images including marking information of UI elements on which actions are to be executed according to embodiments of the present disclosure.

For example, when a task specification 21 is input as in Table 1, information about a snapshot image corresponding to each action included in a first subtask ("Access a website where a target application is implemented (a "URL of the website where functions of the target application are implemented") through a target browser") may be obtained as in Table 5 in operation S71 of FIG. 7. In this case, in operation S74 of FIG. 7, a snapshot still image corresponding to each of a first action ("Double-click an icon of a target browser."), a second action ("Click an address bar to enter a URL of a website where the target application is implemented."), and a third action ("Enter 'the URL of the website where the target application is implemented' and press the 'Enter' key.") included in the first subtask may be obtained as shown in FIGS. 10A through 10C.

For example, a snapshot image corresponding to the first action included in task knowledge 51 may be a snapshot image in which an icon of a target browser, which is a UI element on which the first action is to be executed, is marked as shown in FIG. 10A.

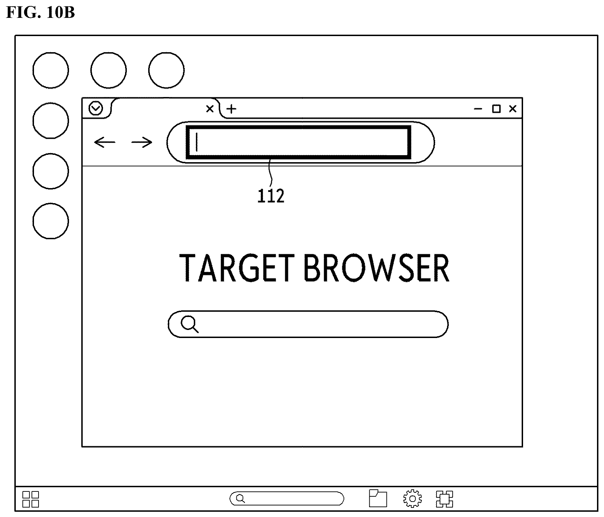

For another example, a snapshot image corresponding to the second action included in the task knowledge 51 may be a snapshot image in which an address bar, which is a UI element on which the second action is to be executed, is marked as shown in FIG. 10B.

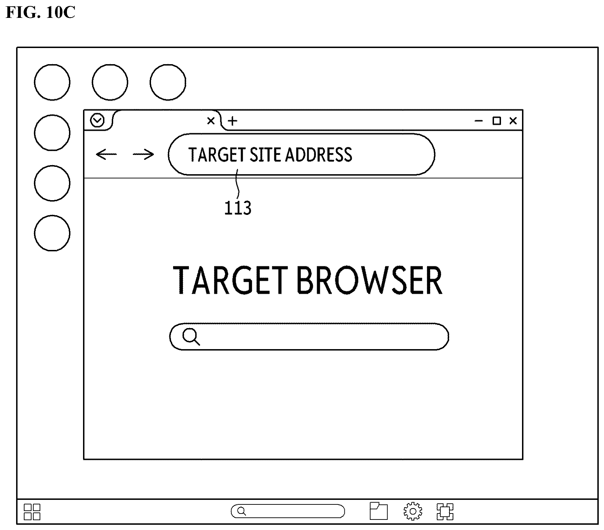

For another example, if a UI element on which the third action is to be executed is text input and/or key input, a snapshot image corresponding to the third action included in the task knowledge 51 may not include marking information of a specific UI element as shown in FIG. 10C.

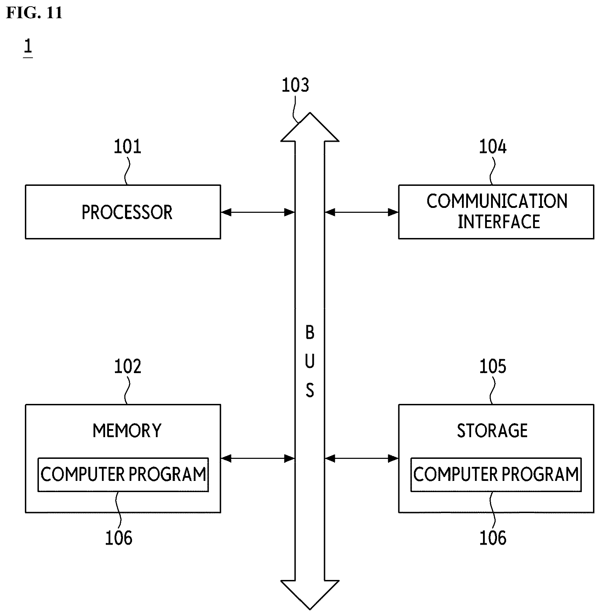

FIG. 11 is an illustrative hardware configuration diagram illustrating the computing device 1.

Referring to FIG. 11, the computing device 1 may include at least one processor 101, a system bus 103, a communication interface 104, a memory 102, which loads a computer program 106 executed by the processor 101, and a storage 105, which stores the computer program 106. Even though FIG. 11 depicts only components related to the embodiments of the present disclosure, it is obvious to one of ordinary skill in the art to which the present disclosure pertains that the computing device 1 may further include other generic components, in addition to the components depicted in FIG. 11. Moreover, in some embodiments, the computing device 1 may be configured with some of the components depicted in FIG. 11 omitted. The components of the computing device 1 will hereinafter be described.

The processor 101 may control the overall operation of each of the components of the computing device 1. The processor 101 may be configured to include at least one of a central processing unit (CPU), a micro-processor unit (MPU), a micro-controller unit (MCU), a graphics processing unit (GPU), Neural Processing Unit (NPU) or any form of processor well-known in the field of the present disclosure. Additionally, the processor 101 may perform computations for at least one application or program to execute operations/methods according to some embodiments of the present disclosure. The computing device 1 may be equipped with one or more processors.

In Addition, the computing device 1 may further include database, and the processor 101 may store data and/or information generated/output according to some embodiments of the present disclosure in the memory 102 and/or a database. Here, the database in which the data and/or information is stored is not limited to the database included in the computing device 1, and may include, for example, a database of external server.

The memory 102 may store various data, commands, and/or information. The memory 102 may load the computer program 166 from the storage 105 to execute the operations/methods according to some embodiments of the present disclosure. The memory 102 may be implemented as a volatile memory such as a random-access memory (RAM), but the present disclosure is not limited thereto.

The bus 103 may provide communication functionality between the components of the computing device 1. The bus 103 may be implemented in various forms such as an address bus, a data bus, and a control bus.

The communication interface 104 may support wired or wireless Internet communication of the computing device 1. Additionally, the communication interface 104 may also support various other communication methods. To this end, the communication interface 104 may be configured to include a communication module well-known in the technical field of the present disclosure.

The storage 105 may non-transitorily store at least one computer program 106. The storage 105 may be configured to include a non-volatile memory such as a read-only memory (ROM), an erasable programmable ROM (EPROM), an electrically erasable programmable ROM (EEPROM), a flash memory, as well as a computer-readable recording medium (e.g., non-transitory recording medium) in any form well-known in the technical field of the present disclosure, such as a hard disk or a removable disk.

The computer program 106, when loaded into the memory 102, may include one or more instructions that enable the processor 101 to perform the operations/methods according to some embodiments of the present disclosure. That is, by executing the loaded one or more instructions, the processor 101 may perform the operations/methods according to some embodiments of the present disclosure.

In the present disclosure, a computer-readable (non-volatile) storage medium can store at least one instruction or computer program, and at least one instruction or computer program, when executed by at least one processor, causes at least one processor to perform the methods and/or operations according to some embodiments of the present disclosure.

For example, a computer program 106 may include instructions for obtaining task knowledge including a screen snapshot image of a first user device which corresponds to each action included in a task; providing information about the task knowledge to a generative AI model; providing a snapshot image of a current screen of a second user device to the generative AI model; obtaining action information that must be executed on the current screen from the generative AI model as a response to the provision of the snapshot image; controlling the second user device to automatically execute an action corresponding to the action information on the current screen; and repeating the providing of the snapshot image of the current screen to the generative AI model, the obtaining of the action information and the controlling of the second user device to automatically execute the action corresponding to the action information until the processing of the task is terminated.

For another example, the computer program 106 may include instructions for receiving a natural language-based task specification corresponding to a task including a plurality of sequentially executed actions; receiving a screen snapshot image of a first user device corresponding to the task; extracting a partial snapshot image corresponding to each of the actions from the screen snapshot image using the task specification; identifying a UI element on which an action corresponding to the partial snapshot image is to be executed among a plurality of UI elements included in the partial snapshot image; and generating task knowledge including the partial snapshot image corresponding to each of the actions and information about the UI element identified as an execution target of each of the actions.

Various embodiments of the present disclosure and their effects have been described so far with reference to FIGS. 1 through 11. The effects according to the technical idea of the present disclosure are not limited to those mentioned above, and other effects not discussed may be clearly understood by those skilled in the art from the following description.

The technical idea of the present disclosure described so far can be implemented as computer-readable code on a computer-readable medium. The computer program recorded on the computer-readable recording medium may be transmitted over a network, such as the Internet, to other computing devices where it can be installed and used.

Although operations are illustrated in a specific order in the drawings, it should not be understood that the operations need to be executed in the specific order shown or in sequential order, or that all illustrated operations need to be executed to obtain desired results. In certain circumstances, multitasking and parallel processing may be advantageous. In concluding the detailed description, those skilled in the art will appreciate that many variations and modifications may be made to the example embodiments without substantially departing from the principles of the present disclosure. Therefore, it should be appreciated that the embodiments as described above are not restrictive but illustrative in all respects.

## Claims

1. A method of automating task processing, the method being performed by a computing system and comprising:
obtaining task knowledge comprising a screen snapshot image of a first user device which corresponds to each action included in a task;
providing information about the task knowledge to a generative artificial intelligence (AI) model;
providing a snapshot image of a current screen of a second user device to the generative AI model;
obtaining action information to be executed on the current screen from the generative AI model as a response to the provision of the snapshot image;
controlling the second user device to automatically execute an action corresponding to the action information on the current screen; and
repeating the providing of the snapshot image of the current screen to the generative AI model, the obtaining of the action information and the controlling of the second user device to automatically execute the action corresponding to the action information until processing of the task is terminated.

2. The method of claim 1, wherein the task knowledge comprises natural language-based text about each action.

3. The method of claim 1, wherein the screen snapshot image comprises marking information of a user interface (UI) element on which an action is to be executed.

4. The method of claim 1, wherein the action information is executable code that implements an action to be executed on the current screen of the second user device.

5. The method of claim 1, wherein the task knowledge comprises information about an initial screen state corresponding to the task, and further comprising controlling the second user device to set the current screen of the second user device to the initial screen state.

6. The method of claim 1, wherein the action information comprises information about whether the processing of the task is terminated.

7. The method of claim 6, wherein the action information further comprises information about whether the processing of the task is successful based on termination of the processing of the task, and
wherein the controlling of the second user device to automatically execute the action corresponding to the action information comprises:
displaying a UI element indicating failure of the processing of the task on the current screen of the second user device based on the failure of the processing of the task.

8. The method of claim 1, wherein the providing of the information about the task knowledge to the generative AI model comprises:
receiving user input regarding processing conditions of the task;
generating an input prompt, which comprises the task, the processing conditions and the task knowledge, in response to the received user input; and
providing the input prompt to the generative AI model.

9. A system for automating task processing, the system comprising:
at least one processor; and
at least one memory storing instructions which, when executed by the at least one processor, cause the at least one processor to perform operations,
wherein the operations comprise:
an operation of obtaining task knowledge comprising a screen snapshot image of a first user device which corresponds to each action included in a task;
an operation of providing information about the task knowledge to a generative AI model;
an operation of providing a snapshot image of a current screen of a second user device to the generative AI model;
an operation of obtaining action information to be executed on the current screen from the generative AI model as a response to the provision of the snapshot image;
an operation of controlling the second user device to automatically execute an action corresponding to the action information on the current screen; and
an operation of repeating the operation of providing the snapshot image of the current screen to the generative AI model, the operation of obtaining the action information and the operation of controlling the second user device to automatically execute the action corresponding to the action information until processing of the task is terminated.

10. The system of claim 9, wherein the task knowledge comprises natural language-based text about each action.

11. The system of claim 9, wherein the screen snapshot image comprises marking information of a UI element on which an action is to be executed.

12. The system of claim 9, wherein the action information is executable code that implements an action to be executed on the current screen of the second user device.

13. The system of claim 9, wherein the task knowledge comprises information about an initial screen state corresponding to the task, and the operations further comprise an operation of controlling the second user device to set the current screen of the second user device to the initial screen state.

14. The system of claim 9, wherein the action information comprises information about whether the processing of the task is terminated and information about whether the processing of the task is successful based on termination of the processing of the task, and
wherein the operation of controlling the second user device to automatically execute the action corresponding to the action information comprises:
an operation of displaying a UI element indicating failure of the processing of the task on the current screen of the second user device based on the failure of the processing of the task.

15. A non-transitory computer-readable recording medium storing computer program executable by at least one processor to execute:
obtaining task knowledge comprising a screen snapshot image of a first user device which corresponds to each action included in a task;
providing information about the task knowledge to a generative AI model;
providing a snapshot image of a current screen of a second user device to the generative AI model;
obtaining action information to be executed on the current screen from the generative AI model as a response to the provision of the snapshot image;
controlling the second user device to automatically execute an action corresponding to the action information on the current screen; and
repeating the providing of the snapshot image of the current screen to the generative AI model, the obtaining of the action information and the controlling of the second user device to automatically execute the action corresponding to the action information until processing of the task is terminated.
